# EUROPÄISCHE PATENTSCHRIFT

(11) **EP 2 996 095 B1**
(45) Veröffentlichungstag und Bekanntmachung des Hinweises auf die Patenterteilung: **17.07.2024**
(21) Anmeldenummer: 14184437.3
(22) Anmeldetag: 11.09.2014
(51) Int. Cl.: G07G 1/00, G07G 1/14, G06Q 20/20

(54) **Verfahren und Vorrichtung zur Steuerung eines Kassensystems**
Method and device for controlling a cash register system
Procédé et dispositif de commande d'un système de caisse

(43) Veröffentlichungstag der Anmeldung: 16.03.2016
(73) Patentinhaber: Diebold Nixdorf Systems GmbH, 33106 Paderborn (DE)
(72) Erfinder: Düllings, Peter, 14621 Schönwalde-Glien (DE); Kirschke, Uwe, 13505 Berlin (DE); Sommer, Martin, 13467 Berlin (DE)

(56) Entgegenhaltungen:
- EP-A1- 2 680 243
- EP-A1- 2 871 619
- EP-A2- 2 645 343
- WO-A1-2014/057646
- US-A1- 2009 006 656
- US-A1- 2009 019 187
- US-A1- 2012 066 079
- US-A1- 2012 233 006
- US-A1- 2013 346 027
- US-A1- 2014 019 274

## Beschreibung

Die vorliegende Erfindung liegt in dem Bereich der Kassensysteme, insbesondere von Kassensystemen, wie diese im Groß- und Einzelhandel vorkommen.

Traditionelle Kassensysteme bestehen im Wesentlichen aus einem bekannten PC oder umfassen Elemente, die aus der PC Technologie bekannt sind, auf welchem eine Software zur Bereitstellung einer Kassenfunktionalität ausgeführt wird, sowie an diesen PC angeschlossene weitere Einheiten, wie zum Beispiel Scanner, Tastatur, Drucker, Bildschirm und Kassenlade.

Aus den Druckschriften US 2012/233006 A1, US 2013/346027 A1, EP 2 680 243 A1, US 2012/066079 A1, US 2014/019274 A1, sind unterschiedliche Kassensysteme bekannt.

Nachteilig an solchen traditionellen Kassensystemen sind unter anderem die fehlende Mobilität und die damit eingeschränkte Verwendbarkeit eines solchen Kassensystems, was insbesondere in größeren Groß- und Einzelhandelsfilialen dazu führt, dass eine hohe Anzahl komplett ausgestatteter Kassensysteme an fest vorgegebenen Plätzen bereitgestellt werden muss. Dies ist hinsichtlich des verhältnismäßig hohen Preises für den benötigten PC nicht wünschenswert. Weiterhin wird hierdurch Stellfläche verschwendet, da nicht immer eine 100%ige Auslastung der Kassensysteme vorliegt.

Es ist Aufgabe der Erfindung, ein Kassensystem bereitzustellen, mit dessen Hilfe eine hohe Mobilität, Verwendbarkeit und Auslastung des Kassensystems gewährleistet werden kann.

Diese Aufgabe wird durch eine Vorrichtung mit den Merkmalen des Anspruchs 1 sowie durch ein Verfahren mit den Merkmalen des unabhängigen Verfahrensanspruchs 10 gelöst.

Vorteilhafte Weiterbildungen der Erfindung sind in den abhängigen Ansprüchen angegeben.

Im Wesentlichen umfasst die Erfindung ein Kassensystem umfassend eine stationäre Einheit, die über zumindest eine Verbindung mit zumindest einer Kassenperipherie-Einheit verbunden ist. Weiterhin umfasst das Kassensystem eine mobile Einheit, die eine Anzeigevorrichtung, sowie eine Eingabevorrichtung umfasst, wobei die mobile Einheit eingerichtet ist zur Ausführung einer Kassensoftware, in deren Ablauf ein Zugriff auf die Kassenperipherie-Einheit erfolgt. Die Kassenperipherie-Einheiten können eine oder mehrere der folgenden Komponenten sein: Ein automatischer Kassentresor, Kassenlade, Drucker, Tastatur, Scanner, 3D Scanner, Pin Pad (über LAN), Kartenleser, Monitor, Zeilenanzeige, Waage, NFC Lesegerät, Noteneinzahler, Notenauszahler, Münzeinzahler und/oder Münzauszahler.

Ein weiterer Bestandteil des Kassensystems ist eine Verwaltungseinheit. Ziel ist es, der mobilen Einheit mithilfe der stationären Einheit ein oder mehrere Kassenperipherie-Einheiten zur Verfügung zu stellen. Damit ein solcher Zugriff nicht unkontrolliert abläuft, gibt es eine Verwaltungseinheit, die den Zugriff der mobilen Einheit auf die Kassenperipherie-Einheiten und die stationäre Einheit steuert.

Die mobile Einheit ist über eine erste Verbindung mit der stationären Einheit verbindbar. Bei dieser Verbindung kann es sich einerseits um eine Funkverbindung handeln, über die Daten ausgetauscht werden, die an die Kassenperipherie-Einheiten gesendet werden sollen, und auch die zur Authentifizierung notwendigen Daten. Andererseits kann es sich auch um eine Kontakt-Verbindung handeln, durch die ein physikalischer Kontakt der beiden Einheiten entsteht, über die in einer Ausführungsform ausschließlich Authentifizierungsdaten ausgetauscht werden. Über eine zweite Kontakt-Verbindung werden Daten für die Kassenperipherie-Einheiten ausgetauscht. Zu beachten ist, dass die Verbindung möglichst nur in einem engen Umkreis zwischen stationärer Einheit und mobiler Einheit funktionieren soll, damit ein zu weites Entfernen der mobilen Einheit von der stationären Einheit vermieden werden kann, um zum Beispiel die Kassenlade noch im Blick zu haben. Hier bietet sich die Bluetooth Low Energy (BT LE) Beacon-Technologie an, da eine Skalierung der Sendereichweite im Bereich bis 10m möglich ist. Bei drahtlosen Standards sollten somit jene ausgewählt werden, die in einem engen räumlichen Bereich funktionieren.

Weiterhin ist die mobile Einheit über eine zweite Verbindung mit der Verwaltungseinheit verbunden. Über diese Verbindung werden in der Regel Zugriffsinformationen und -parameter ausgetauscht, die den Zugriff auf die Kassen-Peripherieeinheiten steuern.

Auch die stationäre Einheit ist über eine dritte Verbindung mit der Verwaltungseinheit verbunden. Auch diese Verbindung dient im Wesentlichen der Steuerung des Zugriffs der mobilen Einheit auf die Kassenperipherie-Einheiten. Durch diese Verbindungen werden durch die Verwaltungseinheit sowohl die mobile Einheit als auch die stationäre Einheit angesteuert, um den Zugriff auf die Kassen-Peripherieeinheiten zu erhalten.

Hierzu ist die Verwaltungseinheit eingerichtet, um aufgrund eines Regelwerks zu prüfen, ob eine erste logische Verbindung der mobilen Einheit zu der stationären Einheit und eine zweite logische Verbindung der mobilen Einheit zu der zumindest einen Kassenperipherie-Einheiten herzustellen ist, und falls die Prüfung erfolgreich ist, so wird ein Zugriff über die logische Verbindung der mobilen Einheit auf die stationäre Einheit und ein Zugriff über die logische Verbindung der mobilen Einheit auf die Kassenperipherie-Einheiten erlaubt, und die Verwaltungseinheit erfasst eine entsprechende logische Verbindung der Geräte. Als logische Verbindung wird in diesem Zusammenhang eine Verbindung bezeichnet, die tatsächlich physikalisch über mehrere unterschiedliche Protokolle und Netzwerktechnologien erfolgen kann, jedoch für die mobile Einheit als eine Verbindung über ein lokales Interface mit einem lokalen Interface-Protokoll erscheint. Als Beispiel könnte hier zum Beispiel ein virtueller RS232 oder USB Anschluss fungieren, der auf der mobilen Einheit als virtueller Treiber implementiert wird, und somit der Anwendungssoftware als eine Standardschnittstelle zur Verfügung gestellt wird. Über diese virtuelle Schnittstelle wird dann mithilfe unterschiedlicher Netzwerkprotokolle und der stationären Einheit eine Verbindung zu einer Kassenperipherie-Einheit hergestellt. So kann zum Beispiel die tatsächliche Verbindung über ein Netzwerk erfolgen, um dann durch die stationäre Einheit in eine serielle Schnittstelle oder eine USB Schnittstelle umgewandelt zu werden, durch die die Kassenperipherie-Einheit mit der stationären Einheit verbunden ist. Für die mobile Einheit sieht es so aus, als würde die Kassenperipherie-Einheit unmittelbar an der mobilen Einheit angeschlossen sein. Tatsächlich jedoch besteht eine physikalische Verbindung über mehrere Protokolle und Netzwerk- bzw. Verbindungstechnologien hinweg. Unter einem virtuellen COM Port versteht man eine Emulation von seriellen RS232 Schnittstellen (echte COM Ports), welche mittels eines Betriebssystem-Treibers realisiert werden und alle Aufrufe, an Peripheriegeräte und deren Rückmeldungen emuliert.

Der Treiber kann in gleicher Weise wie der Treiber für eine physikalisch vorhandene, serielle RS232 Schnittstelle, Daten von der Applikation erhalten (WRITE). Bei der virtuellen RS232 Schnittstelle, werden die Daten jedoch über die drahtgebundene oder drahtlose Kommunikation zu einem anderen Rechner weitergegeben. RS232 Steuersignale wie DSR, welche Aufschluss darüber geben, ob ein RS232 Gerät an dem Rechner angeschlossen ist, werden durch den dem virtuellen COM Port zugeordneten Treiber virtualisiert -in der Form, dass im Falle eines Verbindungsabbruchs über das Netzwerk diese Signale entsprechend emuliert werden. Insgesamt verhält sich der echte RS232 Treiber und der virtuelle RS232 Treiber transparent zur Applikation. Die Applikation kann also nicht unterscheiden, ob ein Peripheriegerät physikalisch über ein RS232 Kabel an dem Rechner angeschlossen ist, oder ob es sich um einen virtuellen RS232 Treiber handelt, welcher die Kommunikation über ein Netzwerk mit dem anderen Rechner durchführt und den Datenverkehr zu einem dort angeschlossenen Peripheriegerät weiterleitet.

Der virtuelle COM Port ersetzt somit drahtlos oder drahtgebunden eine herkömmliche serielle drahtgebundene Verbindung ohne Softwareänderung der oberen Schichten.

Das Regelsystem ist in einer bevorzugten Ausführungsform als Software auf der Verwaltungseinheit implementiert und dort abgespeichert. Hierbei können Prozessoren, Arbeitsspeicher, dauerhafter Speicher, Betriebssystem und Datenbanken zusammenspielen. Hierbei handelt es sich um Daten, die in einer Datenbank abgelegt sein können und bestimmte Zugriffsrechte bestimmen. In das Regelwerk kann eine ID aufgenommen werden, die der mobilen Einheit und der stationären Einheit jeweils zugeordnet sind. Anhand dieser ID sind die mobile Einheit und die stationäre Einheit eindeutig zu identifizieren und es kann festgelegt werden, ob bestimmte Geräte miteinander kombiniert werden dürfen. Zusätzlich gibt es eine ID auch für die Kassenperipherie-Einheiten. Hierdurch kann abgebildet werden, welche Komponenten mit welchen logisch verbunden sind. Weiterhin verwaltet dieses Regelwerk auch den aktuellen Status der Verbindungen. Anhand dieses aktuellen Status kann das Regelwerk entscheiden, welche Kassenperipherie-Einheit mit welcher mobilen Einheit verbunden werden darf. Eine Mehrfachzuordnung ist hierbei ausgeschlossen. Auch sollten bestimmte Kategorien von Kassenperipherie-Einheiten nicht mit mobilen Einheiten verbunden werden, wenn sich die mobilen Einheiten nicht in einer unmittelbaren Umgebung befinden. Sollte zum Beispiel die mobile Einheit zu weit entfernt werden, so dass kein Funkkontakt mehr mit der stationären Einheit gegeben ist, so teilt die stationäre Einheit dies der Verwaltungseinheit mit und die Verwaltungseinheit und/oder die stationäre Einheit entscheiden dann, dass diese Zuordnung von bestimmten Kassenperipherie-Einheiten aufgehoben wird. Als solche wichtigen Kassenperipherie-Einheiten können zum Beispiel die Geldausgabeeinheiten bezeichnet werden. Hierdurch soll vermieden werden, dass mobile Einheiten, die zu weit entfernt sind von der Geldausgabeeinheit, angesteuert werden können, um Geld auszugeben. Auch das Antwortverhalten wird regelmäßig überprüft. Sollten zu große Latenzzeiten auftreten, so ist dies ein Hinweis darauf, dass die Verbindung nicht optimal ist bzw. ein zu großer Abstand besteht, so dass eine Zuweisung aufgehoben wird. Ein Aspekt, der in das Regelwerk einfließen kann, ist die Benutzerkennung, die ein Benutzer bereitstellen muss, wenn er sich an der mobilen Einheit anmeldet. Weitere Aspekte können die Art der mobilen Einheit und der stationären Einheit sein bzw. deren Konfiguration. So können bestimmte Software-Entwicklungsstände oder Hardware-Entwicklungsstände dazu führen, dass bestimmte Verbindungen nicht entstehen können. Eine Vielzahl von weiteren Regeln ist denkbar.

Die mobile Einheit ist mit der stationären Einheit über die Verbindung verbindbar. Diese Verbindung zwischen der mobilen und der stationären Einheit kann, wie oben ausgeführt wurde, sowohl drahtlos als auch über physikalische Kontakte erfolgen. Beim Entstehen der Verbindung wird eine Anfrage an die Verwaltungseinheit gesendet, damit die Verwaltungseinheit anhand des Regelwerks prüft, ob eine Verbindung der mobilen Einheit mit der stationären Einheit und/oder deren Kassenperipherie-Einheit erlaubt ist, und wenn diese erlaubt ist, so sendet die Verwaltungseinheit eine entsprechende Nachricht an die mobile Einheit und/oder die stationäre Einheit, um den Zugriff über die logische Verbindung zu erlauben.

Die Verwaltungseinheit erhält sowohl eine Anfrage über die Verbindung von der mobilen Einheit und parallel eine Anfrage über die Verbindung von der stationären Einheit, um einen Zugriff über die logische Verbindung zu erlauben. Hierbei übertragen beide Geräte die jeweilige ID des Partners und ihre eigene ID mit einem Zeitstempel an die Verwaltungseinheit. Anhand dieser parallel übertragenen Daten kann die Verwaltungseinheit ein Zeitfenster festlegen, innerhalb derer diese Anfrage übertragen werden muss. Sollten die Anfragen von beiden Geräten innerhalb des Zeitfensters eintreffen, so wird beiden Geräten entsprechend mitgeteilt, dass ein Zugriff auf der Basis des Regelwerks erlaubt ist. Hierbei werden entsprechende Informationen an die mobile Einheit gesendet, so dass die entsprechenden virtuellen-Treiber konfiguriert werden können. Die Konfiguration erfolgt dabei automatisch. Eine entsprechende Nachricht wird an eine stationäre Einheit gesendet. Die stationäre Einheit gibt dann die entsprechenden Kassenperipherie-Einheiten für das mobile Endgerät frei, so dass ein Zugriff erfolgen kann.

Die mobile Einheit und/oder stationäre Einheit sind ausgebildet, um ihre ID über eine Kontaktverbindung oder über eine drahtlose Nahbereichsverbindung wie NFC, RFID, Zigbee, Bluetooth und/oder Bluetooth Low Energy auszutauschen, um diese dann über ein Netzwerk wie WLAN, Ethernet oder Bluetooth an den Verwaltungsserver zu übermitteln.

Die Verbindung zwischen den einzelnen Einheiten ist vorzugsweise verschlüsselt, wobei die Schlüssel über einen anderen Kanal miteinander auszutauschen sind. Aufgrund der Dreiecksverbindung der Einheiten steht ein solcher Kanal normalerweise zur Verfügung. Die Verschlüsselung kann sowohl symmetrisch als auch asymmetrisch erfolgen. Die Schlüssel können alternativ auch durch die Verwaltungseinheit erzeugt und verwaltet werden. In einer Ausführungsform ist auch die Verwendung von Signaturen und ein neuer PKI (Public Key Infrastructure) denkbar. Ferner kann auch eine Identity Based Encryption auf der Basis der ID stattfinden. Alternativ können die Schlüssel auch über USB Stick oder andere Speichermedien miteinander im Vorfeld bzw. bei der Konfiguration ausgetauscht werden. Alternativ kann dies auch über hoch gesicherte Schlüsselerzeugung über austauschbare SmartCards erfolgen.

Nach dem Aufbau der Verbindung zwischen der mobilen und stationären Einheit erfolgt die Verbindung von der stationären Einheit und/oder mobilen Einheit zur Verwaltungseinheit über LAN, WLAN oder Bluetooth. Die Verbindung der mobilen Einheit zur stationären Einheit erfordert allerdings ein räumlich begrenztes Netzwerk, vorzugsweise Bluetooth, Bluetooth Low Energy, Bluetooth Low Energy iBeacon^{™}, Zigbee oder eine Kabelverbindung bzw. Steckverbindung. Es ist allerdings auch denkbar, dass ein WLAN genutzt wird, wobei dann allerdings nur eine begrenzte Anzahl von unkritischen Kassenperipherie-Einheiten zur Verfügung gestellt wird, wie zum Beispiel ein Drucker oder eine Anzeigeeinheit. Aufgrund der Klassifizierung bzw. Einstufung der Kassenperipherie-Einheiten können somit unkritische Geräte auch angesprochen werden, wenn ein Netzwerk-Standard zwischen der stationären Einheit und der mobilen Einheit verwendet wird, der eine größere Entfernung erlaubt.

In einer weiteren Ausführungsform ist die Verwaltungseinheit in dem POS HUB/Stationäre Einheit als logische Einheit ausgebildet. Die Verwaltungseinheit ist dabei vorzugsweise logisch oder physikalisch getrennt von der stationären Einheit. Dies kann durch zusätzliche Hardware erfolgen, oder durch eine Virtualisierung, so dass die Verwaltungseinheit als virtuelles System auf der Hardware der stationären Einheit arbeitet. Es gibt somit dann eine Vielzahl von stationären Einheiten von denen eine die Mastereinheit ist, die die Verwaltungseinheit aufweist. Alternativ sind auch mehrere Verwaltungseinheiten denkbar, die jeweils redundant arbeiten und Daten miteinander austauschen, so dass im Falle des Ausfalls einer Verwaltungseinheit eine andere die Funktion übernehmen kann.

In einer weiteren Ausführungsform ist die mobile Einheit ausgebildet, um eine interaktive Auswahl von einer stationären Einheit und/oder Kassenperipherie-Einheiten zu erlauben. Hierbei wird dem Benutzer eine Anwendung bereitgestellt, die den Umgebungsbereich scannt, um die dort zugänglichen stationären Einheiten aufzulisten. Die Auflistung der stationären Einheiten muss dann ebenfalls schon beschränkt werden durch Nachfrage bei der Verwaltungseinheit, so dass nur die stationären Einheiten dargestellt werden die eine Verbindung erlauben. Zusätzlich zu den stationären Einheiten werden deren Kassenperipherie-Einheiten dargestellt und der Benutzer kann durch selektives Auswählen die einzelnen Geräte seiner mobilen Einheit zuordnen. Sobald eine entsprechende Auswahl getroffen wurde, läuft der oben beschriebene Prozess ab, bei dem eine entsprechende logische Verbindung zu den Kassenperipherie-Einheiten aufgebaut wird.

Die Nähe des stationären Geräts wird mittels einer dort angebrachten, autark versorgten Sende-Einheit (z.B. Bluetooth Low Energy iBeacon^{™} oder s.g. nearables) ermöglicht. Diese sendet über eine kleine Batterie und versorgt zyklisch Daten mit der einzigartigen Identifizierungsnummer der jeweiligen stationären Einheit an die mobile Einheit.

In einer weiteren Ausführungsform kann die mobile Einheit physikalisch mit der stationären Einheit verbunden werden. Dies ist zum Beispiel durch einen Steckkontakt möglich. Sobald eine solche Verbindung entsteht und eine entsprechende Zuordnung der stationären Einheit zu der mobilen Einheit durch die Verwaltungseinheit stattgefunden hat, wird die mobile Einheit mit der stationären Einheit physikalisch verschränkt. Es wird durch einen Aktuator eine physikalische Verriegelung vorgenommen, nach einem physikalischen Verbinden der stationären Einheit mit der mobilen Einheit, wobei die Verriegelung durch die Verwaltungseinheit nach einem Regelwerk gesteuert wird. Alternativ kann die Verriegelung automatisch erfolgen ohne Verwendung des Regelwerks der Verwaltungseinheit. Das Regelwerk kann bestimmen, dass nur spezifische Benutzer diese Verriegelung durch ein entsprechendes Kommando lösen dürfen.

Ein weiterer Teil der Erfindung ist ein Verfahren, das durch die beschriebene Vorrichtung implementiert wird. Hierbei erfolgt eine Kommunikation zwischen der stationären Einheit und der mobilen Einheit und der Verwaltungseinheit. Die Verwaltungseinheit steuert die Zuordnung der mobilen Einheit zur stationären Einheit und deren Kassenperipherie-Einheiten. Lediglich wenn das Regelwerk, das ebenfalls oben beschrieben wurde, eine Verbindung erlaubt, so werden die gewünschten Kassenperipherie-Einheiten zugeordnet. Durch die Zuordnung bauen dann die mobile Einheit und stationäre Einheit eine logische Verbindung zur Kassenperipherie-Einheit auf, die auf der mobilen Einheit so ausgebildet ist, dass sie als physikalische direkte Verbindung für die Anwendungen erscheint. Hierzu wird ein entsprechender virtueller Treiber so konfiguriert, dass er seine Daten entweder unmittelbar oder mittelbar über die stationäre Einheit zur Kassenperipherie-Einheit sendet.

Erfindungsgemäß umfasst das Kassensystem eine mobile Einheit, umfassend eine Anzeigevorrichtung, sowie eine Eingabevorrichtung, wobei die mobile Einheit eingerichtet ist zur Ausführung einer Kassensoftware. Weiterhin umfasst das Kassensystem eine stationäre Einheit, die über zumindest eine Verbindung mit zumindest einer Kassenperipherie-Einheit verbunden ist. Weiterhin umfasst das Kassensystem eine Verwaltungseinheit. Die mobile Einheit ist über eine erste Verbindung mit der stationären Einheit verbindbar und über eine zweite Verbindung mit der Verwaltungseinheit verbindbar. Die stationäre Einheit ist über eine dritte Verbindung mit der Verwaltungseinheit verbindbar. Weiterhin ist die Verwaltungseinheit eingerichtet, um eine erste logische Verknüpfung der mobilen Einheit zu der stationären Einheit und/oder eine zweite logische Verknüpfung der mobilen Einheit zu der zumindest einen Kassenperipherie-Einheit herzustellen.

Der grundlegende Gedanke der vorliegenden Erfindung liegt in der Auflösung der strikten Zuordnung von einer, die Kassensoftware ausführenden Einheit zu den restlichen Kassenperipherie-Einheiten. Durch Trennung der erfindungsgemäßen, mobilen Einheit, auf welcher die Kassensoftware ausgeführt wird, von den restlichen Kassenperipherie-Einheiten wird vorteilhaft erreicht, dass ein und dieselben Kassenperipherie-Einheiten durch mehrere mobile Einheiten verwendet werden können. Da die Bedienung der Kassensoftware durch den Benutzer der mobilen Einheit - beispielsweise die Erfassung der vom Kunden ausgewählten Ware, oder die Vorbereitung der Rechnungserstellung - im Gegensatz zur abschließenden Abwicklung, welche zwingend das Vorhandensein der Kassenperipherie voraussetzt - beispielsweise das Ausdrucken der Quittung, die Abwicklung des Bezahlvorgangs - den deutlich größten zeitlichen Anteil darstellt, kann so eine bessere Auslastung der Kassenperipherie erzielt werden. Dies führt unter anderem zu einer Kostenreduktion und zur Einsparung von Stellfläche, da weniger Kassenperipherie-Einheiten eingesetzt werden müssen. Weiterhin, erlaubt eine solche Trennung von der die Kassensoftware ausführenden mobilen Einheit, von der restlichen Kassenperipherie eine verbesserte Betreuung der Kunden und Abwicklung des Einkaufs, da so die Benutzer der mobilen Einheit den Kunden in den Geschäftsräumen begleiten und beraten können, sowie den Kauf der vom Kunden ausgewählten Ware bereits hier vorbereiten können.

Gemäß der vorliegenden Erfindung bereitet ein Benutzer der mobilen Einheit einen Kauf vor und nutzt erst für die abschließende Abwicklung die Kassenperipherie. Hierfür wird erfindungsgemäß mit Hilfe der stationären Einheit eine Verbindung zwischen der mobilen Einheit und der mit der stationären Einheit verbundenen Kassenperipherie hergestellt, sodass die auf der mobilen Einheit ausgeführte Kassensoftware auf die mit der stationären Einheit verbundenen Kassenperipherie zugreifen kann. Zur Herstellung dieser Verbindung ist die erfindungsgemäße Verwaltungseinheit erforderlich, welche die Zuordnung einer mobilen Einheit zu einer stationären Einheit und zu der damit verbundenen Kassenperipherie kontrolliert. Soll eine solche Verbindung hergestellt werden, so ist es vorteilhaft zu überprüfen, ob eine bestimmte mobile Einheit und/oder ein diese Einheit zu bedienender Benutzer überhaupt auf eine bestimmte stationäre Einheit, bzw. auf eine bestimmte damit verbundene Kassenperipherie zugreifen darf. Hierdurch kann vorteilhaft vermieden werden, dass dieselbe Kassenperipherie gleichzeitig durch verschiedene mobile Einheiten verwendet wird und/oder dass unberechtigte Benutzer eine bestimmte Kassenperipherie bedienen (z.B. die Kassenlade öffnen).

Das **Kassensystem** ist vorzugsweise ein Kassensystem für den Groß- und/oder Einzelhandel. Es ist vorzugsweise an eine Datenbank angeschlossen, welche Informationen zu den zu verkaufenden Waren und/oder zu den an einem Kassensystem getätigten Umsätzen enthalten. Solche Informationen sind bevorzugt Bestand der Ware, Preis der Ware und/oder Informationen zu der Verpackung der Ware, wie Volumen und/oder Farbe.

Die **mobile Einheit** kann jegliche tragbare Vorrichtung sein, welche die Ausführung einer Kassensoftware erlaubt und über zumindest eine Anzeigevorrichtung, sowie zumindest eine Eingabevorrichtung verfügt. Die Kassensoftware wird auf der mobilen Einheit ausgeführt. Die mobile Einheit wird vorzugsweise über einen Akkumulator als Stromquelle betrieben. Die Anzeigevorrichtung dient dem Anzeigen von Informationen, welche durch die Kassensoftware bereitgestellt werden. Sie ist bevorzugt ein Bildschirm, noch bevorzugter eine LCD- oder OLED-Anzeige. Die Eingabevorrichtung dient der Eingabe von Informationen durch den Benutzer des Kassensystems. Diese eingegebenen Informationen sind bevorzugt für die Kassensoftware bestimmt. Bevorzugte Eingabevorrichtungen sind Scanner, Tastatur und/oder Touchscreen. Bevorzugt ist die mobile Einheit als tragbarer PC ausgebildet. Noch bevorzugter ist die mobile Einheit als ein sogenannter Tablet-Computer (Tablet-PC) ausgebildet. Der Tablet-Computer weist weiter bevorzugt einen Touchscreen auf, der vorteilhaft gleichzeitig als Anzeige-, sowie Eingabevorrichtung dient.

Die Kassensoftware ist vorzugsweise die gleiche oder leicht adaptierte Anwendung, die bisher auf stationären Komplett-Einheiten installiert war. Ziel ist es, möglichst wenige Änderungen bei der Software vorzunehmen, jedoch eine möglichst hohe Variabilität zu erreichen. Das kann dann erreicht werden, wenn auf der mobilen Einheit das gleiche Betriebssystem wie auf den bisherigen traditionellen Kassensystem wie z.B. Windows oder Linux eingesetzt wird. In einer weiteren Form sind aber auch als mobile Einheit Rechner einsetzbar, die beispielsweise Tablet oder SmartPhone Betriebssysteme wie z.B. Linux, Unix, iOS, Blackberry und Android verwenden.

Die stationäre Einheit dient dem Anschluss, zumindest einer Kassenperipherie-Einheit. Als stationäre Einheit kommt jeder gebräuchliche PC in Betracht, insbesondere handelt es sich hierbei um einen minimal ausgestatteten und daher preisgünstigen PC. Bevorzugt dient die stationäre Einheit als Ladeeinheit für den Akkumulator der mobilen Einheit, die zumindest eine Kassenperipherie-Einheit ist und über eine Verbindung an die stationäre Einheit angeschlossen ist. Diese Verbindung kann jeglicher Art sein, um einen Datenaustausch zwischen Kassenperipherie-Einheit und stationärer Einheit zu gewährleisten, beispielsweise über eine drahtlose, drahtgebundene, oder optische Verbindung. Bevorzugt ist die Verbindung einer permanenten Verbindung, noch bevorzugter eine drahtgebundene Verbindung. Am bevorzugtesten sind Kassenperipherie-Einheiten und die stationäre Einheit über USB und/oder RS232-Verbindungen miteinander verbunden.

Kassenperipherie-Einheit bzw. Kassenperipherie sind vorzugsweise ein automatischer Kassentresor, Kassenlade, Drucker, Tastatur, Scanner, 3D Scanner, Pin Pad, Kartenleser, Monitor, Zeilenanzeige, Waage, NFC Lesegerät, Noteneinzahler, Notenauszahler, Münzeinzahler und/oder Münzauszahler.

Die Verwaltungseinheit dient dazu, den Zugang der mobilen Einheit und/oder der darauf ausgeführten Kassensoftware, zu der mit der stationären Einheit verbundenen Kassenperipherie-Einheit zu verwalten. Die Verwaltungseinheit kann ein herkömmlicher PC sein, oder bevorzugt als ein Server ausgeführt sein. Die Verwaltungseinheit ist bevorzugt als eigenständige Einheit ausgebildet, kann jedoch auch in die stationäre Einheit integriert werden. Das erstere Szenario ist vorteilhaft, falls das erfindungsgemäße Kassensystem in ein Umfeld integriert werden soll, in dem bereits ein Server vorgehalten wird und/oder wenn eine größere Anzahl von mobilen und/oder stationären Einheiten zu verwalten sind. Dasletztere Szenario ist vorteilhaft, wenn ein solcher Server nicht bereits vorhanden ist, die Kosten für einen solchen eingespart werden sollen und/oder nur eine kleinere Anzahl von mobilen und/oder stationären Einheiten zu verwalten sind. Hier ist es ausreichend, die Verwaltungseinheit in eine der verwendeten stationären Einheiten zu integrieren.

Die hier beschriebene Erfindung gestattet die Weiterverwendung von bestehenden Applikationsprogramm-Architekturen von einer traditionellen Kasse auf ein mobiles Gerät und sichert die gegenüber der physikalischen Verbindung von Kassenperipheriegeräten vergleichsweise unsichere drahtlosen Kommunikation zu diesen Geräten gegenüber Abhören und Manipulation ab.

Bisherige drahtgebundene Schnittstellen werden mittels eines Softwarestacks und einer störsicheren Drahtlosübertragungstechnik (z.B. WLAN in Kombination mit Bluetooth oder ZigBee) ersetzt, wobei die Authentifizierung drahtlos oder drahtgebunden stattfinden kann.

### Figurenbeschreibung:

Im Folgenden werden die Figuren kurz beschrieben, auf die in der folgenden detaillierten Beschreibung von möglichen Ausführungsformen Bezug genommen wird.

Es zeigt:
- Fig. 1: ein klassisches Kassensystem nach dem Stand der Technik, bei dem das Kassensystem mit einer Reihe von Kassenperipheriegeräten verbunden ist und einen fest verbundenen Bildschirm aufweist;
- Fig. 2: zeigt die Struktur, gemäß der vorliegenden Erfindung, wobei ein Steuerungsrechner die Funktion einer stationären Einheit einnimmt und ein Tablet-Rechner die Funktion der mobilen Einheit übernimmt, die durch eine drahtlose Verbindung miteinander verbunden sind;
- Fig. 3: zeigt die Verbindung der mobilen Einheit (Tablet PC) mit der stationären Einheit (POS device HUB), wobei bei der Verbindung eine ID ausgetauscht wird;
- Fig. 4: zeigt eine mögliche Infrastruktur der vorliegenden Erfindung und die Art der Netzwerkschnittstellen samt Verwaltungsrechner;
- Fig. 5: zeigt den Ablauf eines Verfahrens, bei dem sich eine mobile Einheit mit der stationären Einheit (POS) verbindet, wobei die Verwaltungseinheit (Server) in den Ablauf eingebunden wird, ein Benutzer greift hierbei in den Ablauf ein, indem dieser durch entsprechende Benutzeroberflächen mit Anfragen versehen wird;
- Fig. 6: zeigt die physikalischen Verbindungen und logischen Verbindungen der mobilen und stationären Einheiten der vorliegenden Erfindung.

### Beschreibung von möglichen Ausführungsformen:

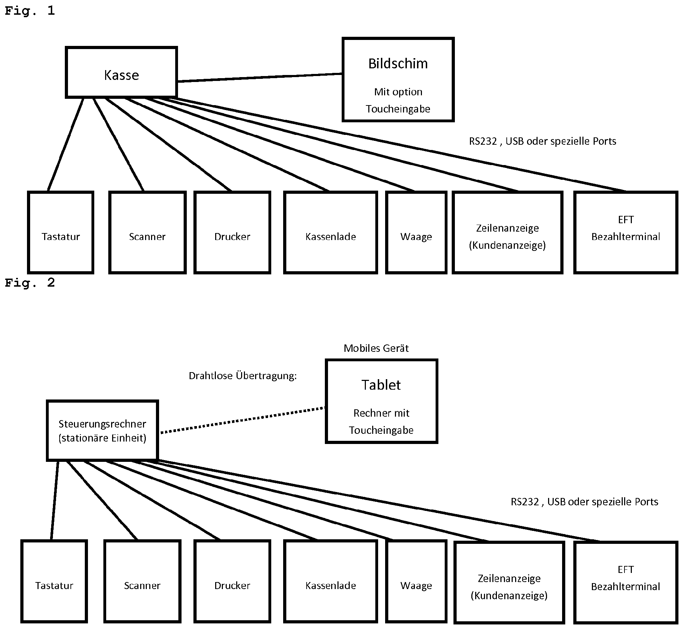

Die Figur 1 zeigt ein klassisches Kassensystem, gemäß dem Stand der Technik, mit einer stationären Kasse, die über Kabelverbindungen mit unterschiedlichen Kassenperipherie-Einheiten verbunden ist. Dieses Kassensystem hat in der Regel einen Bildschirm, der in einer bevorzugten Ausführungsform eine Touch-Eingabe erlaubt. Die stationäre Kasse, auch die stationäre Einheit genannt, ist über eine RS232, USB oder spezielle Ports mit einer Tastatur, Scanner, Drucker, Kassenlade, Waage, Zeilenanzeige oder einem EFT Bezahl-Terminal verbunden.

Eine traditionelle Kasse besteht somit im Wesentlichen aus:
- der Kasse selbst, welche aus einem PC-artigen Rechner mit einer bestimmten Menge an USB, RS232 und speziellen Portanschlüssen für die Peripheriegeräte besteht;
- verschiedenen Peripheriegeräte, wie zum Beispiel Bondrucker, ein EFT Terminal zum Bezahlen, einen Etikettenleser (Scanner), eine mehrzeilige Kundenanzeige (Zeilenanzeige), ein automatischer Kassentresor, Drucker, Tastatur, Scanner, 3D Scanner, Kartenleser, Monitor, Waage, NFC Lesegerät, Noteneinzahler, Notenauszahler, Münzeinzahler, Münzauszahler und/oder eine Kassenlade;
- einem Bildschirm zur Anzeige von Bedienerdialogen für den Kassierer. Häufig auch mit einer sogenannten Touch-Eingabe, so dass der Kassierer mit dem Finger direkt die angezeigten Dialoge bedienen kann;
- zusätzlich kann auch optional noch eine Tastatur für den Kassierer z.B. zur Eingabe von Artikelnummern angeschlossen sein.

Mit der stärkeren Verbreitung von mobilen Geräten kommt auch die Anforderung nach Einsatz von mobilen Geräten am Kassenarbeitsplatz zur Geltung. Die heutigen üblichen Verfahren erfordern in der Regel in zwei Themenfeldern Änderungen vorzunehmen, die aufwändig und kostenintensiv sind:
- Eine Neuanpassung des Applikationsprogrammes, um auf Peripheriegeräte zugreifen zu können, ist notwendig.
- Eine Anpassung der Anschlussart von Peripheriegeräten z.B. anstelle von USB und/oder RS232 nun eine Ethernet Anbindung, ist notwendig.

Die Figur 2 zeigt die abgewandelte Form, bei dem die Kasse aus zwei Komponenten besteht: einer mobilen Einheit, die vorzugsweise als Tablet ausgebildet ist, und über eine berührungsempfindliche Eingabe verfügt. Diese mobile Einheit ist vorzugsweise über eine drahtlose Verbindung mit einem Steuerungsrechner, auch stationärer Einheit genannt, verbunden, der dann wiederum mit den Kassenperipherie- Einheiten verbunden ist.

Die hier dargestellte Erfindung erlaubt es, die Systeme in beiden Themenfeldern unverändert weiterzuverwenden.

Das Tablet kann dabei das gleiche Betriebssystem wie der, bei der Kasse vormals verwendete PC-artige Rechner haben. Andere Betriebssysteme wie Linux, Unix, iOS, Blackberry oder Android sind auch möglich. Die Verwaltungseinheit kann ein Betriebssystem verwenden, welches dem Betriebssystem des Tablets entspricht oder ein alternatives Betriebssystem aus der oben erwähnten Liste verwenden.

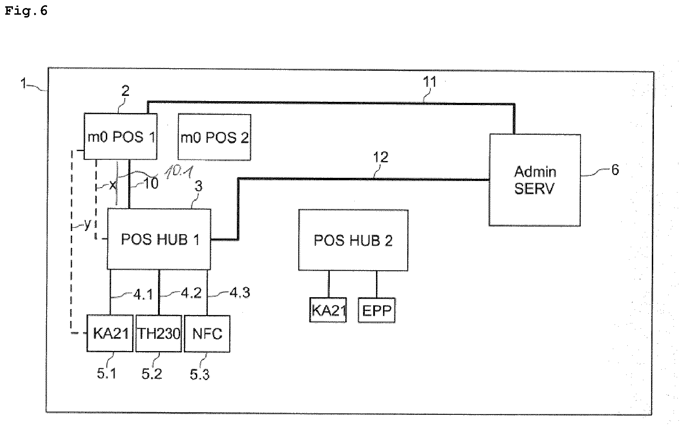

Die Figur 6 zeigt das Kassensystem 1, das aus einem oder mehreren mobilen Einheiten 2 (moPOS1, moPOS2) besteht. Weitere Bestandteile sind ein oder mehrere stationäre Einheiten 3 (POS HUB1, POS HUB2), die jeweils über Verbindungen 4.1, 4.2, 4.3 mit Kassenperipherie-Einheiten 5.1, 5.2, 5.3 verbunden sind. Weiterhin gibt es noch eine Verwaltungseinheit 6 (Administrations-Server), die über eine Verbindung 11 mit der mobilen Einheit 2 verbunden ist und über eine Verbindung 12 mit der stationären Einheit 3. Ferner gibt es mindestens eine Verbindung 10 zwischen der mobilen Einheit und der stationären Einheit. In einer bevorzugten Ausführungsform gibt es noch eine Verbindung 10.1, die insbesondere dann zu berücksichtigen ist, wenn die Geräte physikalisch miteinander verbunden werden, insbesondere dann wenn die mobile Einheit in die stationäre Einheit eingesteckt wird. Der Zugriff auf die Kassenperipherie-Einheiten erfolgt über logische Verbindungen X oder Y, wobei der physikalische Zugriff in der Regel über die Verbindung 10 und 4.1,4.2,4.3 erfolgt.

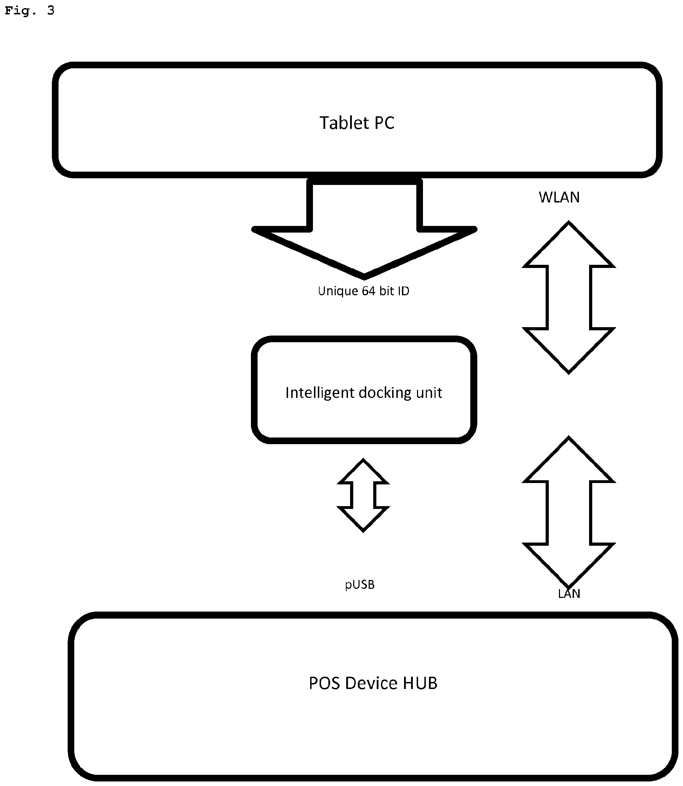

Die Figur 3 zeigt eine kontaktbedingte Authentifizierung. Wird der Tablet PC/mobile Einheit in die intelligente Docking unit /stationäre Einheit gesteckt, erfolgt mittels zweier Kontakte (jegliche andere Anzahl von Kontakten ist ebenfalls möglich) am Tablet und an der Docking unit ein ID-Datenaustauch zwischen dem, im Tablet PC integrierten Microcontroller (ULPMC) und dem Microcontroller in der intelligenten Docking unit. Es wird eine 64 Bit (unique ID) als Identifizierung / Authentifizierung des Tablets übertragen. Die intelligente Docking unit überträgt diese ID via USB an den POS device HUB/stationäre Einheit.

Alternativ ist eine kontaktlose Authentifizierung denkbar.

Es gibt hier verschieden Möglichkeiten der Authentifizierung, z.B.:
- Einlesen eines NFC tags an der Docking unit mittels des im Tablet integrierten NFC readers.
- Einlesen eines am Tablet angebrachten RFID tags mittels eines am POS device HUB/stationäre Einheit angeschlossenen Mifare readers.
- Einlesen einer Tablet ID durch eine kontaktgebundene Verbindung zwischen Tablet und docking unit.

Die ID oder Kennung des Tablets und die logische Kennung des POS Device HUB's können nun über LAN an einen Administrations- Server/Verwaltungseinheit gesendet werden.

Zur Erhöhung der Sicherheit findet der Austausch der Tablet ID zwischen Tablet (mobile Einheit) und Administrations-Server auf unterschiedlichen Übertragungsstrecken (kontaktgebunden und/oder drahtlos) statt.

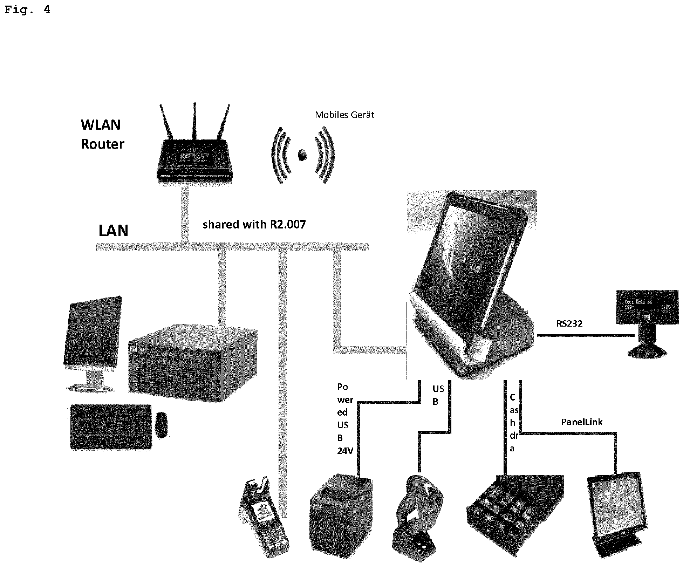

Die Verwaltungseinheit überprüft, ob dieses spezifische Tablet/mobile Einheit auf die Peripheriegeräte/Kassenperipherie-Einheiten am POS device HUB zugreifen darf. Über einen WLAN access point (Fig. 4) wird diese Information an die auf dem Tablet PC laufende Kassen-Applikation übertragen. Somit sind die Peripheriegeräte logisch mit dem Tablet PC verbunden (angedockt) und die Kassenapplikation kann auf die Geräte zugreifen.

Anderen Tablet PCs wird dieser Zugriff verwehrt und dieser Zustand wird über eine LED an der Docking unit der stationären Einheit (POS HUB) angezeigt, bis die Peripheriegeräte wieder freigegeben wurden, oder eine Timeout-Situation eintritt und die Paarung nach einer Mitteilung des Tablets oder des POSDevice HUB an den Administrations-Server getrennt wird.

Hierzu werden die Peripheriegeräte nicht an eine Kasse, sondern an dem wesentlich einfacheren POS device HUB Rechner (stationäre Einheit) angeschlossen (Fig. 2, Fig 4, Fig. 6). Auf dieser stationären Einheit kann ein kleines Betriebssystem ablaufen.

Für die Datenübertragung vom Peripheriegerät zum Applikationsprogram läuft auf dem Steuerungsrechner (stationäre Einheit) ein Multiplexer-Programm, welches Daten von allen Peripheriegeräten entgegennimmt, diese über die drahtlose Übertragungsstrecke zum mobilen Gerät (Tablet) in Paketen mit einer Gerätekennung sendet. Dort wird mit einem entsprechenden Demultiplexer-Programm die Paketkennung gelesen. Die einzelnen Pakete werden gemäß der Paketkennung wieder entflechtet und auf sogenannte virtuelle RS232 Ports, welche die gleiche Schnittstelle in Richtung Applikationsprogramm für die Peripheriegeräte anbietet, verteilt. Dabei ist jedem Peripheriegerät ein virtueller RS232 Port zugeordnet. Der virtuelle RS232 Port wird durch ein Programm realisiert, welches auf dem Betriebssystem die gleichen Applikationsprogramm-Aufrufe abhandelt, welche auf der traditionellen Kasse für angeschlossene RS232 Geräte verwendet werden.

Für die Datenübertragung vom Applikationsprogramm zum Peripheriegerät findet der gleiche Vorgang statt, jedoch läuft auf dem mobilen Gerät das Multiplexer-Programm und auf dem Steuerungsrechner das De-Multiplexer-Programm. In gleicher Weise werden die Daten in Paketen mit Peripheriekennung über die drahtlose Übertragungsstrecke gesendet:
Die Applikation ruft ein WRITE auf, welcher die Daten zum virtuellen RS232 Port Programm transportiert. Dieser transportiert die Daten zum Multiplexer-Programm, welches diese als Paket mit einer Gerätekennung über die drahtlose Übertragungsstrecke sendet. Am Steuerungsrechner wird das Paket empfangen, die Paketkennung im Demultiplexer-Programm ausgewertet und zum adressierten Peripheriegerät gesendet.

Als drahtlose Kommunikation können Industriestandards wie zum Beispiel Wireless LAN (WLAN), Bluetooth, Bluetooth Low Energy, Bluetooth Low Energy Beacon-Technology oder ZigBee eingesetzt werden. Die Fragestellung, welcher Industriestandard geeignet ist, entscheidet sich auch nach der Fragestellung, ob die drahtlose Übertragungsstrecke Latenzzeiten (besser: Antwort-Verzögerungszeiten) garantiert, die kleiner als die Zeiten sind, welche in Applikation und Software Schichten als Timeout-Zeiten zum Zugriff auf RS232 Geräten programmiert sind. Diese liegen üblicherweise im zehn Millisekunden-Bereich und können mit einigen Standards erreicht werden.

WLAN wird hier aufgrund der höheren Reichweite für zeitlich unkritisch zu behandelnde Peripheriegeräte genutzt, während z.B.: Bluetooth oder auch ZigBee für die Kommunikation mit Geräten zum Einsatz kommt, die mit einer festgelegten maximalen Antwortzeit zu behandeln sind (s.o.). Bluetooth oder auch ZigBee bietet hier eine deutlich störsichere Übertragung als WLAN, allerdings, abhängig von der gewählten Geräte-Klasse, auf kürzeren Distanzen.

Somit ergibt sich der Vorteil der Einhaltung einer kurzen Distanz zwischen dem mobilen Gerät und finanztechnisch kritisch zu behandelnder Geräte, wie die Kassenlade (Safe). Der Benutzer ist so gezwungen sich im nahen Umfeld der Kassenlade aufzuhalten, wenn diese geöffnet wird.

Der Datenverkehr unter Bluetooth oder anderer drahtlose Nahbereichsverbindungstechnologien sollte mittels einer zusätzlichen Software-Schicht (z.B.: RSA Verschlüsselung) gegen eine mögliche Manipulation abgesichert werden. Der Empfängerschlüssel wird auf einem anderen Datenweg (z.B.: WLAN) als Bluetooth oder ZigBee übertragen.

Um die geforderte abhör- und manipulationssichere Übertragung an die Peripheriegeräte - insbesondere Bezahlterminal und Kassenlade - zu garantieren, werden in dem Multiplexer- und Demultiplexer-Programm die Pakete nach einem symmetrischen oder asymmetrischen Verschlüsselungsverfahren kodiert. Zur Erhöhung der Sicherheit findet der Schlüsselaustausch zwischen Tablet- und Steuerungsrechner auf einer alternativen Übertragungsstrecke statt: Das kann entweder auch drahtlos sein, jedoch dann mit einem alternativen IndustrieStandard stattfinden, welcher eben nicht für den regulären Datentransfer eingesetzt wird, oder aber auch durch Datentransfer mittels Datenträger (z.B. USB Stick), welcher am Tablet und an dem Steuerungsrechner bei jedem Schlüsselaustausch eingesteckt werden muss oder aber auch über eine andere Strecke, z.B. über die Verwaltungseinheit/ Administrations-Server.

Das Applikationsprogramm auf dem Tablet kann auf die hier mit dem Multiplexer- und Demultiplexer-Programm bereitgestellten virtuellen RS232 Ports direkt auf die Kassenperipheriegeräte zugreifen. Dass es sich um eine drahtlose Kommunikation handelt, ist gegenüber dem Applikationsprogramm verborgen.

Da es in der Regel unterhalb des Applikations-Programmes noch eine Geräteansteuerungsschicht gibt, welche die Ansteuerung von USB Peripheriegeräten und deren RS232 Variante in gleicher Weise gestattet, können auch USB Geräte über virtuelle RS232 Ports ohne Applikationsprogramm-Änderung angesteuert werden. Das Gleiche gilt auch für Geräte, welche über spezielle physikalische Anschlussarten angesteuert werden.

Ferner sind alternative drahtgebundene oder drahtlose Verbindungen zu einem anderen Peripheriegerätesatz denkbar.

Alternativ kann sich ein mobiles Gerät auch, z.B. durch einen Installationsparameter, oder aber durch einen separaten Dialog mit einem anderen Steuerungsrechner verbinden und somit auf einen anderen Peripheriegerätesatz zugreifen.

Der Steuerungsrechner gestattet nur die Verbindung mit einem mobilen Gerät, um auszuschließen, dass mehrere Kassierer gleichzeitig z.B. auf eine Kassenlade zugreifen oder drucken. Ein Wechsel kann immer nach dem Abschluss einer vollständigen Bon Transaktion stattfinden. Dazu muss das zuvor verbundene mobile Gerät die Verbindung getrennt haben, damit sich ein anderes mobiles Gerät anmelden kann.

Die Anmeldung und Abmeldung eines mobilen Gerätes an den Steuerungsrechner erfolgt dabei auch durch Datenübertragung mit symmetrischer oder asymmetrischer Verskriptung/Verschlüsselung. Der dazu notwendige Schlüsselaustausch geschieht in gleicher Weise wie oben beschrieben.

Das oben beschriebene Regelwerk auf der Verwaltungseinheit entscheidet letztendlich welche mobile Einheit sich mit welcher stationären Einheit überhaupt verbinden darf und somit auch die Verriegelung der mobilen Einheit ausgelöst wird. Zusätzlich kann noch die Möglichkeit bestehen, zu definieren, welche mobile Einheit sich mit welchem Peripheriegerät an einer stationären Einheit verbinden darf.

Das Regelwerk bewertet dazu Parameter wie z.B. aktuelle Zeit, individuelle Benutzer Berechtigungen, erlaubte oder verbotene Zuordnungen mobiler Einheit zur stationären Einheit ("Black List" oder "White List"), Belegungszustand der stationären Einheit.

Dazu kann das Regelwerk eine Datenbank verwenden, in der es bestimmte Tabellen gibt.

Hier wird ein Beispiel eines möglichen einfachen Regelwerkes dargestellt. Die Steuerungsparameter sind in Form von Tabellen in einer Datenbank abgelegt, welche dann durch das Regelwerk bewertet werden, um die Entscheidung, ob eine Verbindung statthaft ist oder nicht, zu treffen.

### Beispiel:

**Tabelle 1 - Auflistung aller beteiligten Geräte:**

| # | Name | typ | Netzwerk-Adresse TCP/IP | ID | connectionstate |
|---|---|---|---|---|---|
| 1 | tablet1 | mobil | 196.168.0.10 | 2723ebaf | |
| 2 | tablet2 | mobil | 196.168.0.11 | 2723ebae | devicehub1 |
| 3 | devicehub1 | fixed | 196.168.0.20 | abef1234 | tablet2 |
| 4 | devicehub2 | fixed | 196.168.0.21 | Ffefabab | |
| | | | | | |

Tabelle 1 beinhaltet alle Geräte und den aktuellen Verbindungszustand aller beteiligten mobilen und stationären Einheiten.

Im Falle, dass eine erlaubte Verbindung zwischen zwei Einheiten gebildet werden konnte - also die Authentifizierung erfolgreich war- wird in der Spalte "connection -state" jeweils der Name der anderen Station eingetragen, welche mit der betreffenden Station verbunden ist (im Beispiel Zeile 2 und 3).

Wenn die Verbindung wieder aufgelöst wird, werden entsprechend die Einträge der Spalte "connections-state" wieder gelöscht.

Als einfache Bewertung, ob eine Verbindung statthaft ist, wird als erste Regel diese Tabelle herangezogen:
- Grundsätzlich sollten nur Verbindungen zwischen zwei Einheiten erlaubt sein, wenn eine Einheit eine mobile Einheit ist (Spalte "typ" enthält den Wert "mobil") und die andere Einheit eine stationäre ist (Spalte "typ" enthält den Wert "fixed"). Ist das nicht der Fall, wird die Verbindung abgewiesen.
- Grundsätzlich werden nur Verbindungs-Anfragen von Einheiten erlaubt, wenn der Sender eine TCP/IP Adresse hat, die in der Tabelle enthalten ist. Wird die TCP/IP Adresse nicht gefunden, wird die Verbindung abgewiesen.
- Weiterhin wird die ID, die eine Mindestlänge von 64 Bit haben sollte, des Gerätes mit den aufgelisteten in der Spalte "ID" verglichen. Wenn diese nicht gefunden wurde, wird die Verbindungs-Anfrage abgewiesen.
- Für den Fall, dass von beiden Einheiten - der mobilen und der stationären Einheit - bei der Authentifizierungs-Anfrage mit zwei ID's gearbeitet wird, werden beide ID's verglichen. Wenn eine der ID's nicht stimmig ist oder möglichweise nicht zu der TCP/IP Adresse passt, wird die Verbindung abgewiesen.

Weitere Überprüfungen der Authentizität der anfragenden Einheit über dessen sogenannte Netzwerk MAC Adresse neben der TCP/IP Adresse wäre durch eine weitere Spalte "MAC-Adresse" möglich. Alternativ kann eine Authentifizierung auch ausschließlich über die MAC-Adresse durchgeführt werden, für den Fall, dass dynamische TCP/IP Adressen verwendet werden. Verbindungsabweisung bedeutet immer, dass auch keine Verriegelung der mobilen Einheit stattfindet.

In einer weiteren Ausbaustufe ist auch denkbar, eine sogenannte "Black List" zu führen, welche mögliche Verbindungen, die nach der einfachen Bewertung, statthaft sind, aufgrund dieser Liste zu verweigern. Dazu kann eine weitere Tabelle definiert werden, welche Paare von mobilen Einheiten enthält, denen es nicht gestattet ist, sich miteinander zu verbinden. Für Paare, die nicht aufgeführt sind, ist eine Verbindung erlaubt.

### Beispiel:

**Tabelle 2 - Black-List:**

| # | Name-mobil | Name-stationär |
|---|---|---|
| 1 | tablet1 | devicehub2 |
| 2 | ... | ... |
| 3 | tablet3 | * |

Diese Tabelle würde beispielsweise definieren:
- dass die mobile Einheit tablet1 sich niemals an die stationäre Einheit devicehub2 verbinden darf (Zeile 1).
   Das kann zum Beispiel sinnvoll sein, wenn Tablets von Bedienkräften in der ersten Etage eines Kaufhauses, sich mit den stationären Einheiten der zweiten verbinden möchten, dies aber nicht gewollt ist. Dann würden alle Kombinationen der Tablets der ersten Etage mit den stationären Einheiten der zweiten Etage in die "Black-List" eingetragen werden.
- dass die mobile Einheit tablet3 sich mit keiner stationären Einheit verbinden darf.
   Das kann zum Beispiel sinnvoll sein, wenn ein Tablet durch einen Diebstahl abhandengekommen ist.

Anstelle einer Black-List ist auch eine White-List Tabelle denkbar: Dann werden die Kombinationen von mobilen und stationären Einheiten, welche nur erlaubt sind, aufgezählt. Alle anderen Kombinationen sind dann nicht erlaubt.

Als weitere Ausbaustufe des Regelwerkes ist denkbar, dass Verbindungen von mobilen Einheiten zu stationären Einheiten nur zu bestimmten Zeiten (Timing) - z.B. Öffnungszeiten, Arbeitszeiten, Urlaubszeiten, Schichtzeiten etc. - gestattet sind. Dies kann erreicht werden durch beispielsweise eine zusätzliche Tabelle, welche entsprechende Zeitfenster definiert:

**Tabelle 3 - Timing:**

| # | Name-mobil | Zeit | Wochentage |
|---|---|---|---|
| 1 | tablet1 | 8:00-12:00,13:00-20:00 | Mo, Di, Mi, Do, Fr |
| 2 | tablet2 | 8:00-12:00,13:00-16:00 | Sa, So |
| 3 | ... | ... | ... |
| | | | |

Die Tabelle enthält für alle mobilen Einheiten die Zeiten, in denen Verbindungen zu stationären Einheiten statthaft sind.

Außerhalb der definierten Zeitfenster werden Verbindungsanfragen abgewiesen. Wenn eine bereits verbundene mobile Einheit mit einer stationären Einheit verbunden ist und der Benutzer überschreitet das definierte Zeitfenster, ist es sinnvoll, nicht automatisch einen Verbindungsabbruch durchführen zu lassen, sondern vielmehr
- erst nach dem expliziten, gewollten Verbindungsende durch den Benutzer,
- oder nach einer definierten Zeitspanne der Inaktivität der mobilen Einheit einen automatischen Verbindungsabbruch durchzuführen.

Diese Vorgehensweise ist sinnvoll, um eine bereits begonnene Verkaufstransaktion und die damit notwendige Ansteuerung der Peripherie abschließen zu können.

Als weitere Ausführungsform des Regelwerkes ist denkbar, die Authentifizierung von erlaubten Verbindungen um eine Benutzersteuerung zu erweitern. Insbesondere dann, wenn mobile Einheiten nicht genau einem Benutzer zugeordnet sind, sondern mehrere Bedienkräfte sich mobile Einheiten zu unterschiedlichen Arbeitszeiten teilen. Hier können die Tabellen 2,3 um eine weitere Spalte "Benutzer" erweitert werden, welche dann zur Bewertung mit herangezogen werden.

### Beispiel Tabelle 2b - als Black-List:

| # | Name-mobil | Name-stationär | Benutzer |
|---|---|---|---|
| 1 | tablet1 | devicehub2 | |
| 2 | ... | ... | |
| 3 | tablet3 | * | |
| 4 | tablet2 | * | Nutzer1 |
| 5 | * | * | Nutzer2 |

Die Abfrage könne wie folgt aussehen:
- Wenn der Zeilen-Eintrag in der Spalte "Benutzer" der Tabelle 2 leer ist, gilt die Regel für alle Benutzer.
- Wenn der Zeilen-Eintrag in der Spalte "Benutzer" der Tabelle 2 ein oder mehrere Benutzernamen enthält, ist die Regel nur gültig, wenn der aktuelle Benutzernamen mit einem in der Spalte Benutzer enthalten ist.

In dem Beispiel Tabelle 2b bewirkt der Zusatzeintrag in der Zeile 4, dass die mobile Einheit "tablet2" nur für den Nutzer1 nicht mehr zur Ansteuerung der stationären Einheit verwendet werden kann.

In dem Beispiel Tabelle 2b bewirkt der Zusatzeintrag in der Zeile 5, dass alle mobilen Einheiten für den Nutzer2 nicht mehr zur Ansteuerung irgendwelcher stationären Einheiten verwendet werden können.

Gleiches kann für Tabelle 3 definiert werden.

Als weitere Ausbaustufe des Regelwerkes ist denkbar, die Authentifizierung von erlaubten Verbindungen zwischen mobilen und stationären Einheiten nicht nur bezogen auf die stationäre Einheit zu definieren, sondern zusätzlich um die angeschlossen Peripherie-Einheiten zu erweitern. Des Weiteren kann definiert werden, dass beispielsweise bestimmte Benutzer nur den Zugriff auf die Kassenlade haben, da sie als Kassierer autorisiert sind Bargeld zu behandeln und nicht nur z.B. als Berater Peripheriegeräte zu benutzen, wie auf den Drucker, der Anzeige und den Scanner.

Das Regelwerk ist dann insofern zu erweitern, dass - falls im Falle einer mit den anderen Regeln durchgeführte Bewertung das Ergebnis "Verbindung erlaubt" entstanden ist, zusätzlich eine weitere Tabelle durchsucht wird, um festzulegen, welche der Peripherie-Geräte verwendet werden kann.

Beispiel Tabelle 4 - Peripheriesteuerung:

| # | Name-mobil | Benutzer | Peripherie |
|---|---|---|---|
| 1 | tablet1 | Nutzer1 | Scanner, Drucker, LineDisplay |
| 2 | tablet1 | NutzerChef | * |
| 3 | tablet1 | Nutzer3 | Scanner, Drucker, LineDisplay |
| 4 | tablet2 | * | * |
| | | | |

In diesem Beispiel sind dann folgende Regeln definiert:
- Zeile 1: Falls ein Verbindungaufbau für das Tablet wie in Spalte "Name-mobil" benannt zu einer stationären Einheit mit den bisherigen Regeln als "erlaubt" eingestuft ist, und als Benutzer der Benutzer "Nutzer1" sich angemeldet hatte, ist für diesen nur der Zugriff auf die Peripherie-Geräte Scanner, Drucker, Line-Display statthaft. Die Kassenlade und die Waage dürfen von dem Benutzer nicht angesteuert werden.
- Zeile 2: Falls ein Verbindungaufbau für das Tablet, wie in Spalte "Namemobil" benannt zu einer stationären Einheit mit den bisherigen Regeln als "erlaubt" eingestuft ist, und sich als Benutzer der Benutzer "NutzerChef" angemeldet hatte, darf dieser auf alle Peripherie-Geräte zugreifen (z.B. Kassenlade öffnen).
- Zeile 3 beschreibt die gleiche Regel wie die Zeile 1, jedoch für den Benutzer "Nutzer3",
- Zeile 4: Falls das Tablet 2 benutzt wird, und die bisherigen Regeln einen Verbindungsaufbau als "erlaubt" eingestuft haben, darf jeder Benutzer auf alle Peripherie-Geräte zugreifen.

Wie die in dieser Tabelle nicht aufgeführte Tablets behandelt werden, hängt letztendlich von der Definition des Regelwerkes ab. Denkbar ist, dass diese Regelerweiterung dazu führt, dass für alle nicht aufgeführten Regeln die Verbindung wieder als "nicht erlaubt" eingestuft wird.

Alternativ ist es aber auch denkbar, dass nicht aufgeführte Tablets dazu führen, dass diese Regel nicht angewendet wird, sondern das Ergebnis der vorherigen Regeln als Endergebnis verwendet wird.

In einer weiteren Ausführungsform des Regelwerkes ist es denkbar, dass der Zugriff auf die Kassenlade nur dann erfolgen darf, wenn eine Mindestdistanz zwischen der mobilen Einheit und der stationären Einheit mit der dort angeschlossenen Kassenlade gewährleistet ist. Hierzu kann an der Kassenlade oder der stationären Einheit ein so genanntes (ibeacon^{™}) angebracht werden. Dieses sendet eine einzigartige Identifikationsnummer (UUID). Das mobile Eingabegerät kann nun anhand der Signalstärke ermitteln, in welcher Entfernung es sich von dem stationären Gerät und der daran angeschlossenen Kassenlade befindet. Die folgende Tabelle zeigt eine mögliche Parametrisierung des Regelwerks:

### Beispiel Tabelle 5 - Entfernüngsabhängiger Zugriff auf die Kassenlade:

| # | Entfernungs Status | Zugriff auf Kassenlade | Peripherie |
|---|---|---|---|
| 1 | Unknown | Nicht erlaubt | Kassenlade |
| 2 | Far (bis 30m) | Nicht erlaubt | * |
| 3 | Near (bis 2m) | Erlaubt | * |
| 4 | Immediate (bis 50 cm) | Erlaubt | * |

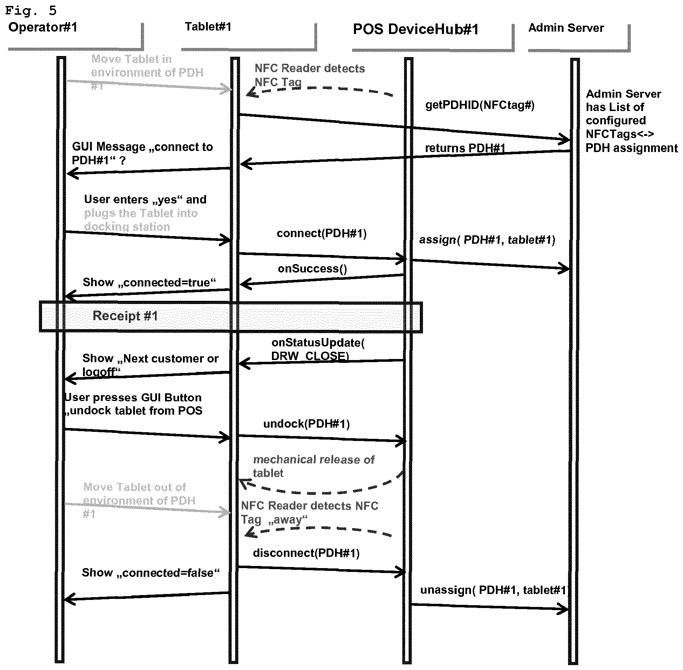

Die Figur 5 zeigt einen entsprechenden beispielhaften Ablauf für ein Windows Betriebssystem. Alternativ kann das Verfahren auch auf andern Betriebssystemen wie Linux, Unix, iOS, Blackberry und/oder Android implementiert sein.
• Der Benutzer bewegt sich mit der mobilen Einheit in Richtung der stationären Einheit / POS Device HUB
   oder alternativ
   die mobile Einheit wird in die Docking unit der stationären Einheit/ POS Device HUB gesteckt.
• Der NFC Reader der mobilen Einheit detektiert den NFC Tag des POS Device HUB, welches die Geräte ID mit einer Mindestlänge von 64 Bit enthält.
• Die mobile Einheit empfängt eine Meldung vom NFC Reader mit dem Tag#. Mit diesem Tag wird die Verwaltungseinheit /adminserver kontaktiert, um den Namen des zugeordneten stationären Gerätes zu erlangen. Die Funktion lautet POSDeviceHUB (getPDHID(NFCtag#) es ist zu beachten, dass alternativ der Name des POS Device HUB von einen zentralen Punkt im Geschäft erlangt werden kann, der vom Server der POS Anwendung bereitgestellt wird.
• Das Tablet/mobile Einheit verbindet sich mit dem POS Device Hub über den virtuellen Treiber mit seinem Namen und ist bereit für die nächste Transaktion.
• Durchführen einer Transaktion (Empfang): Scannen von Waren, Eingeben von Waren, die gesamte Summe bestimmen, den Einkaufsbeleg drucken, die KassenLade öffnen, Wechselgeld berechnen und ausgeben, Schließen der Kassenlade
• der Benutzer bewegt sich mit der mobilen Einheit weg vom POS Device HUB:
   oder alternativ:
   der Benutzer drückt den Knopf "undock" im Benutzerinterface der mobilen Einheit; Die Docking unit des POS Device HUB gibt die mobile Einheit frei und der Benutzer bewegt sich mit der mobilen Einheit weg vom POS Device HUB.
• NFC Reader der mobile Einheit, detektiert die Abwesenheit des NFC Tags des POS Device HUB
• Die mobile Einheit löst sich vom POS Device Hub und ist bereit für eine andere Aufgabe.

In diesem Verfahren wurde beschrieben, wie eine Verbindung der mobilen Einheit mit der stationären Einheit unter Einbindung der Verwaltungseinheit erfolgen kann.

Im Folgenden wird die Erfindung durch die Ansprüche beschrieben, die in einer breitesten Form auszulegen sind. Der Schutzumfang bestimmt sich nach den Ansprüchen. Die Beschreibung soll keine einschränkende Bedeutung besitzen.

## Patentansprüche

1. Kassensystem (1) umfassend
- eine Mehrzahl von stationären Einheiten (3), die jeweils über zumindest eine physikalische Verbindung (4.1, 4.2, 4.3) mit jeweils zumindest einer Kassenperipherie-Einheit (5.1, 5.2, 5.3) verbunden ist,
- eine mobile Einheit (2), umfassend eine Anzeigevorrichtung, sowie eine Eingabevorrichtung, wobei die mobile Einheit eingerichtet ist zur Ausführung einer Kassensoftware, in deren Ablauf ein Zugriff auf die Kassenperipherie-Einheit (5.1,5.2,5.3) über einen Treiber auf der mobilen Einheit für eine virtuelle Schnittstelle erfolgt,
- eine Verwaltungseinheit (6), die von der Mehrzahl von stationären Einheiten (3) unterschiedlich ist, und die die Mehrzahl von stationären Einheiten (3) und deren Kassenperipherie-Einheiten verwaltet,
wobei
- die mobile Einheit (2) über eine erste physikalische Verbindung (10), mit einer der stationären Einheiten (3) verbindbar ist,
- die mobile Einheit über eine zweite physikalische Verbindung (11), die als Netzwerkverbindung ausgebildet ist, mit der Verwaltungseinheit (6) verbindbar ist,
- die stationäre Einheit (3) über eine dritte physikalische Verbindung (12), die als Netzwerkverbindung ausgebildet ist, mit der Verwaltungseinheit (6) verbindbar ist, und
- die Verwaltungseinheit (6) eingerichtet ist, um aufgrund eines Regelwerks, das bestimmt, ob eine Verbindung der mobilen Einheit (2) mit der stationären Einheit (3) und deren Kassenperipherie-Einheit erlaubt ist, zu prüfen, ob eine erste logische Verbindung (X) der mobilen Einheit (2) zu der stationären Einheit (3) und eine zweite logische Verbindung (Y) der mobilen Einheit (2) zu der zumindest einen Kassenperipherie-Einheit herzustellen ist, wobei als logische Verbindung eine Verbindung bezeichnet wird, die physikalisch über mehrere unterschiedliche Protokolle und Netzwerktechnologien erfolgen kann, jedoch für die mobile Einheit als eine Verbindung über ein lokales Interface mit einem lokalen Interface-Protokoll erscheint, und falls die Prüfung erfolgreich ist, so wird ein 'Zugriff über die logische Verbindung (X) der mobilen Einheit (2) auf die stationäre Einheit (3) und ein Zugriff über die logische Verbindung (Y) der mobilen Einheit (2) auf die Kassenperipherie-Einheit (5.1, 5.2, 5.3) erlaubt, und die Verwaltungseinheit (6) erfasst eine entsprechende erlaubte logische Verbindung (X) (Y), und wobei die mobile Einheit und stationäre Einheit ausgebildet sind, um zum Entstehen der logischen Verbindung eine Anfrage an die Verwaltungseinheit (6) zu senden, damit die Verwaltungseinheit (6) anhand des Regelwerks prüft, ob eine logische Verbindung (X)(Y) der mobilen Einheit (2) mit der stationären Einheit (3) und deren Kassenperipherie-Einheit (5.1,5.2,5.3) erlaubt ist, und wenn diese erlaubt ist, so sendet die Verwaltungseinheit (6) eine entsprechende Nachricht an die mobile Einheit (2) und die stationäre Einheit (3), um den Zugriff über die logische Verbindung (X)(Y) zu erlauben und andernfalls wird eine logische Verbindung nicht hergestellt.

2. Kassensystem nach dem vorhergehenden Anspruch, wobei die Verwaltungseinheit (6) sowohl eine Anfrage über die physikalische Verbindung (11) von der mobilen Einheit (2) erhalten und parallel eine Anfrage über die physikalische Verbindung (12) von der stationären Einheit (3) erhalten muss, um einen Zugriff über die logische Verbindung (X)(Y) zu erlauben.

3. Kassensystem nach einem oder mehreren der zwei vorhergehenden Ansprüche, wobei eine ID der mobilen Einheit (2) und/oder eine ID der stationären Einheit (3) erfassbar ist, und diese an die Verwaltungseinheit (6) zur Identifikation übermittelt wird
und/oder wobei die stationäre Einheit (3) und die mobile Einheit (2) innerhalb eines definierten Zeitraums mit der Verwaltungseinheit (6) kommunizieren müssen.

4. Kassensystem nach einem oder mehreren der drei vorhergehenden Ansprüche, wobei die mobile Einheit (2) und/oder die stationäre Einheit (3) ausgebildet sind, um eine ID über eine Kontaktverbindung und/oder drahtlose Nahbereichsverbindung vorzugsweise NFC, RFID, Zigbee, Bluetooth und/oder Bluetooth low energy auszutauschen, um die ID dann über ein Netzwerk vorzugsweise WLAN, Ethernet und/oder Bluetooth an den Verwaltungsserver (6) zu übermitteln.

5. Kassensystem nach den vorhergehenden Ansprüchen, wobei die physikalische Verbindung (10) und/oder physikalische Verbindung (10.1) zwischen den mobilen Einheiten (2), der stationären Einheit (3), der Verwaltungseinheit (6) und/oder der Kassenperipherie-Einheit (5.1, 5.2, 5.3) eine verschlüsselte physikalische Verbindung ist und vorzugsweise wobei die Verwaltungseinheit (6) eingerichtet ist, um Schlüssel eines Verschlüsselungs-Schlüsselpaares an die mobile Einheit und/oder stationäre Einheit zu übermitteln und vorzugsweise diese auch zu generieren.

6. Kassensystem nach einem oder mehreren der vorhergehenden Ansprüche, wobei auf der mobilen Einheit (2) die virtuelle Schnittstelle, vorzugsweise RS232, USB, der Kassenanwendung bereitgestellt ist, die als logische Verbindung (X)(Y) zur stationären Einheit (3) und/oder Kassenperipherie-Einheit (5.1, 5.2, 5.3) geführt ist und die Authentifizierung über die Verwaltungseinheit (6) durchgeführt wird.

7. Kassensystem nach einem oder mehreren der vorhergehenden Ansprüche, wobei das Regelwerk überprüft, ob die Zuordnung, die ID, das Timing, die räumliche Entfernung, das Benutzerlogin und/oder die Kategorie der Kassenperipherie-Einheit zulässig sind, um eine logische Verbindung zu erlauben.

8. Kassensystem nach einem oder mehreren der vorhergehenden Ansprüche, wobei die mobile Einheit (2) ausgebildet ist, um eine interaktive Auswahl von stationären Einheiten (3) und/oder Kassenperipherie-Einheiten (5.1, 5.2, 5.3) zu erlauben
und/oder wobei eine physikalische Verriegelung vorhanden ist, um nach einem physikalischen Verbinden der stationären Einheit (3) mit der mobilen Einheit (2), physikalisch zu verriegeln, wobei die Verriegelung durch die Verwaltungseinheit (6) nach einem Regelwerk gesteuert wird.

9. Kassensystem nach einem oder mehreren der vorhergehenden Ansprüche, wobei die Kassenperipherie-Einheit (5.1, 5.2, 5.3) ein oder mehrere der folgenden Komponenten sind:
ein automatischer Kassentresor, Kassenlade, Drucker, Tastatur, Scanner, 3d Scanner, Pin Pad, Kartenleser, Monitor, Zeilenanzeige, Waage, NFC Lesegerät, Noteneinzahler, Notenauszahler, Münzeinzahler und/oder Münzauszahler.

10. Verfahren zur Steuerung eines Kassensystem (1), das Kassensystem umfasst:
- eine Mehrzahl von stationären Einheiten (3), die über zumindest eine physikalische Verbindung (4.1, 4.2, 4.3) mit zumindest einer Kassenperipherie-Einheit (5.1, 5.2, 5.3) verbunden ist,
- eine mobile Einheit (2), umfassend eine Anzeigevorrichtung, sowie eine Eingabevorrichtung, wobei die mobile Einheit eingerichtet ist zur Ausführung einer Kassensoftware, in deren Ablauf ein Zugriff auf die Kassenperipherie-Einheit (5.1,5.2,5.3) über einen Treiber auf der mobilen Einheit für eine virtuelle Schnittstelle erfolgt,
- eine Verwaltungseinheit (6), die von der der Mehrzahl stationären Einheiten (3) unterschiedlich ist und die die Mehrzahl von stationären Einheiten (3) und deren Kassenperipherie-Einheiten verwaltet, und die Verwaltungseinheit ein Regelwerk verwaltet, wobei das Regelwerk bestimmt, ob eine Verbindung der mobilen Einheit (2) mit einer der stationären Einheiten (3) und deren Kassenperipherie-Einheit erlaubt ist;
wobei
- die mobile Einheit über eine erste physikalische Verbindung (10) mit der stationären Einheit (3) verbindbar ist,
- die mobile Einheit über eine zweite physikalische Verbindung (11), die als Netzwerkverbindung ausgebildet ist, mit der Verwaltungseinheit (6) verbindbar ist,
- die stationäre Einheit (3) über eine dritte physikalische Verbindung (12), die als Netzwerkverbindung ausgebildet ist, mit der Verwaltungseinheit (6) verbindbar ist, und
umfassend die Schritte:
- Herstellen einer Verbindung zwischen der mobilen Einheit (2) und einer der stationären Einheiten, um anzuzeigen, dass auf die Kassenperipherie-Einheit zugegriffen werden soll;
- Anfrage von der mobilen Einheit (2) und der stationären Einheit (3) an die Verwaltungseinheit (6), ob eine logische Verbindung (X)(Y) zwischen der mobilen Einheit (2) und der stationären Einheit und deren Kassenperipherie-Einheit möglich ist, wobei als logische Verbindung eine Verbindung bezeichnet wird, die physikalisch über mehrere unterschiedliche Protokolle und Netzwerktechnologien erfolgen kann, jedoch für die mobile Einheit als eine Verbindung über ein lokales Interface mit einem lokalen Interface-Protokoll erscheint;
- Prüfen durch die Verwaltungseinheit (6) mit dem Regelwerk, ob die logische Verbindung (X)(Y) möglich ist,
- falls eine logische Verbindung möglich ist, Mitteilen an die mobile Einheit und die stationäre Einheit, dass eine logische Verbindung möglich ist,
- Herstellen der logischen Verbindung (X) durch die mobile Einheit zu der stationären Einheit und der logischen Verbindung (Y) zu der Kassenperipherie-Einheit, und
wobei die Verwaltungseinheit (6) sowohl eine Anfrage über die Verbindung (11) von der mobilen Einheit (2) erhalten und parallel eine Anfrage über die Verbindung (12) von der stationären Einheit (3) erhalten muss, um einen Zugriff über die logische Verbindung (X)(Y) zu erlauben, und wobei vorzugsweise, die Anfragen innerhalb eines definierten Zeitfensters eintreffen müssen.

11. Kassensystem nach dem vorhergehenden Anspruch, wobei eine ID der mobilen Einheit (2) und/oder eine ID der stationären Einheit (3) erfasst wird, und diese an die Verwaltungseinheit (6) zur Identifikation übermittelt werden.

12. Verfahren nach dem vorhergehend Anspruch, wobei die physikalischen Verbindungen zwischen der mobilen Einheit (2), der stationären Einheit (3), der Verwaltungseinheit (6) und/oder der Kassenperipherie-Einheit (5.1, 5.2, 5.3) verschlüsselt sind.

13. Verfahren nach einem oder mehreren der vorhergehenden Verfahrensansprüche, wobei
auf der mobilen Einheit (2) die virtuelle Schnittstelle, vorzugsweise RS232, USB, der Kassenanwendung bereitgestellt wird, die als logische Verbindung (X)(Y) zur stationären Einheit (3) und/oder Kassenperipherie-Einheit (5.1, 5.2, 5.3) geführt ist.

14. Verfahren nach einem oder mehreren der vorhergehenden Verfahrensansprüche, wobei anhand des Regelwerks überprüft wird, ob die Zuordnung, die ID, das Timing, die räumliche Entfernung, das Benutzerlogin und/oder die Kategorie der Kassenperipherie-Einheit eingehalten werden.

15. Verfahren nach einem oder mehreren der vorhergehenden Verfahrensansprüche, wobei eine physikalische Verriegelung vorhanden ist und nach einem physikalischen Verbinden der stationären Einheit (3) mit der mobilen Einheit (2), eine Verriegelung erfolgt, wobei die Verriegelung durch die Verwaltungseinheit (6) nach einem Regelwerk gesteuert wird.

## Claims

1. Cash register system (1), comprising
- a plurality of stationary units (3), which are respectively connected via at least one physical connection (4.1, 4.2, 4.3) to in each case at least one cash-register peripheral unit (5.1, 5.2, 5.3),
- a mobile unit (2), comprising a display device, and an input device, wherein the mobile unit is set up to execute cash register software, in the process of which the cash-register peripheral unit (5.1, 5.2, 5.3) is accessed via a driver on the mobile unit for a virtual interface,
- a management unit (6), which is different from the plurality of stationary units (3), and which manages the plurality of stationary units (3) and their cash-register peripheral units,
wherein
- the mobile unit (2) can be connected to one of the stationary units (3) via a first physical connection (10),
- the mobile unit can be connected to the management unit (6) via a second physical connection (11), which is designed as a network connection,
- the stationary unit (3) can be connected to the management unit (6) via a third physical connection (12), which is designed as a network connection, and
- the management unit (6) is set up to check, on the basis of a set of rules, which determines whether a connection of the mobile unit (2) to the stationary unit (3) and its cash-register peripheral unit is allowed, whether a first logical connection (X) of the mobile unit (2) to the stationary unit (3) and a second logical connection (Y) of the mobile unit (2) to the at least one cash-register peripheral unit can be established, wherein a connection is referred to as a logical connection if it can physically take place via a number of different protocols and network technologies but for the mobile unit appears as a connection via a local interface to a local interface protocol, and if the check is successful, access to the stationary unit (3) via the logical connection (X) of the mobile unit (2) and access to the cash-register peripheral unit (5.1, 5.2, 5.3) via the logical connection (Y) of the mobile unit (2) is permitted, and the management unit (6) detects a corresponding allowed logical connection (X) (Y), and wherein, to create the logical connection, the mobile unit and the stationary unit are designed to send an enquiry to the management unit (6) in order that the management unit (6) checks on the basis of the set of rules whether a logical connection (X) (Y) of the mobile unit (2) to the stationary unit (3) and its cash-register peripheral unit (5.1, 5.2, 5.3) is allowed and, if it is allowed, the management unit (6) thus sends a corresponding message to the mobile unit (2) and the stationary unit (3) in order to allow access via the logical connection (X) (Y), and otherwise a logical connection is not established.

2. Cash register system according to the preceding claim, wherein the management unit (6) must receive both an enquiry via the physical connection (11) from the mobile unit (2) and in parallel an enquiry via the physical connection (12) from the stationary unit (3) in order to allow access via the logical connection (X) (Y).

3. Cash register system according to one or more of the two preceding claims, wherein an ID of the mobile unit (2) and/or an ID of the stationary unit (3) can be detected, and this is transmitted to the management unit (6) for identification,
and/or wherein the stationary unit (3) and the mobile unit (2) must communicate with the management unit (6) within a defined time period.

4. Cash register system according to one or more of the three preceding claims, wherein the mobile unit (2) and/or the stationary unit (3) are designed to exchange an ID via a contact connection and/or wireless short-range connection, preferably NFC, RFID, Zigbee, Bluetooth and/or Bluetooth low energy, in order then to transmit the ID via a network, preferably WLAN, Ethernet and/or Bluetooth, to the management server (6).

5. Cash register system according to the preceding claims, wherein the physical connection (10) and/or physical connection (10.1) between the mobile units (2), the stationary unit (3), the management unit (6) and/or the cash-register peripheral unit (5.1, 5.2, 5.3) is an encrypted physical connection and preferably wherein the management unit (6) is set up to transmit keys of an encryption key pair to the mobile unit and/or stationary unit and preferably also to generate them.

6. Cash register system according to one or more of the preceding claims, wherein on the mobile unit (2) the virtual interface, preferably RS232, USB, is provided for the cash register application, routed as a logical connection (X) (Y) to the stationary unit (3) and/or cash-register peripheral unit (5.1, 5.2, 5.3), and the authentication is carried out via the management unit (6).

7. Cash register system according to one or more of the preceding claims, wherein the set of rules checks whether the assignment, the ID, the timing, the spatial distance, the user login and/or the category of the cash-register peripheral unit are permissible in order to allow a logical connection.

8. Cash register system according to one or more of the preceding claims, wherein the mobile unit (2) is designed to allow an interactive selection of stationary units (3) and/or cash-register peripheral units (5.1, 5.2, 5.3)
and/or wherein there is a physical interlock to physically establish an interlock after a physical connection of the stationary unit (3) to the mobile unit (2), wherein the interlock is controlled by the management unit (6) on the basis of a set of rules.

9. Cash register system according to one or more of the preceding claims, wherein the cash-register peripheral unit (5.1, 5.2, 5.3) is one or more of the following components:
an automatic cash safe, a cash drawer, a printer, a keyboard, a scanner, a 3d scanner, a pin pad, a card reader, a monitor, a line display, a set of scales, an NFC reader, a banknote depositor, a banknote disburser, a coin depositor and/or a coin disburser.

10. Method for controlling a cash register system (1), the cash register system comprising:
- a plurality of stationary units (3), which are connected via at least one physical connection (4.1, 4.2, 4.3) to at least one cash-register peripheral unit (5.1, 5.2, 5.3),
- a mobile unit (2), comprising a display device, and an input device, wherein the mobile unit is set up to execute cash register software, in the process of which the cash-register peripheral unit (5.1, 5.2, 5.3) is accessed via a driver on the mobile unit for a virtual interface,
- a management unit (6), which is different from the plurality of stationary units (3), and which manages the plurality of stationary units (3) and their cash-register peripheral units, and the management unit manages a set of rules, wherein the set of rules determines whether a connection of the mobile unit (2) to one of the stationary units (3) and its cash-register peripheral unit is allowed;
wherein
- the mobile unit can be connected to the stationary unit (3) via a first physical connection (10),
- the mobile unit can be connected to the management unit (6) via a second physical connection (11), which is designed as a network connection,
- the stationary unit (3) can be connected to the management unit (6) via a third physical connection (12), which is designed as a network connection, and
comprising the steps of:
- establishing a connection between the mobile unit (2) and one of the stationary units in order to indicate that access is to be made to the cash-register peripheral unit;
- enquiry from the mobile unit (2) and the stationary unit (3) to the management unit (6) whether a logical connection (X) (Y) between the mobile unit (2) and the stationary unit and its cash register peripheral unit is possible, wherein a connection is referred to as a logical connection if it can physically take place via a number of different protocols and network technologies but for the mobile unit appears as a connection via a local interface to a local interface protocol;
- checking by the management unit (6) with the set of rules whether the logical connection (X) (Y) is possible,
- if a logical connection is possible, informing the mobile unit and the stationary unit that a logical connection is possible,
- establishing the logical connection (X) by the mobile unit to the stationary unit and the logical connection (Y) to the cash-register peripheral unit, and wherein the management unit (6) must receive both an enquiry via the connection (11) from the mobile unit (2) and in parallel an enquiry via the connection (12) from the stationary unit (3) in order to allow access via the logical connection (X) (Y) and wherein preferably the enquiries must arrive within a defined time window.

11. Cash register system according to the preceding claims, wherein an ID of the mobile unit (2) and/or an ID of the stationary unit (3) is detected, and these are transmitted to the management unit (6) for identification.

12. Method according to the preceding claim, wherein the physical connections between the mobile unit (2), the stationary unit (3), the management unit (6) and/or the cash-register peripheral unit (5.1, 5.2, 5.3) are encrypted.

13. Method according to one or more of the preceding method claims, wherein
on the mobile unit (2) the virtual interface, preferably RS232, USB, is provided for the cash register application, routed as a logical connection (X) (Y) to the stationary unit (3) and/or cash-register peripheral unit (5.1, 5.2, 5.3).

14. Method according to one or more of the preceding method claims, wherein it is checked on the basis of the set of rules whether the assignment, the ID, the timing, the spatial distance, the user login and/or the category of the cash-register peripheral unit are compliant.

15. Method according to one or more of the preceding method claims, wherein there is a physical interlock to physically establish an interlock after a physical connection of the stationary unit (3) to the mobile unit (2), wherein the interlock is controlled by the management unit (6) on the basis of a set of rules.

## Revendications

1. Système de caisse (1), comprenant
- une pluralité d'unités stationnaires (3) qui sont reliées respectivement par au moins une liaison physique (4.1, 4.2, 4.3) à respectivement au moins une unité périphérique de caisse (5.1, 5.2, 5.3),
- une unité mobile (2) comprenant un dispositif d'affichage ainsi qu'un dispositif d'entrée, dans lequel l'unité mobile est conçue pour exécuter un logiciel de caisse au cours du déroulement duquel un accès à l'unité périphérique de caisse (5.1, 5.2, 5.3) a lieu par l'intermédiaire d'un pilote sur l'unité mobile pour une interface virtuelle,
- une unité de gestion (6) qui est différente de la pluralité d'unités stationnaires (3) et qui gère la pluralité d'unités stationnaires (3) et leurs unités périphériques de caisse,
dans lequel
- l'unité mobile (2) peut être reliée à l'une des unités stationnaires (3) par une première liaison physique (10),
- l'unité mobile peut être reliée à l'unité de gestion (6) par une deuxième liaison physique (11) qui est réalisée sous forme de liaison de réseau,
- l'unité stationnaire (3) peut être reliée à l'unité de gestion (6) par une troisième liaison physique (12) qui est réalisée sous forme de liaison de réseau, et
- l'unité de gestion (6) est conçue pour vérifier, sur la base d'un ensemble de règles qui détermine si une liaison de l'unité mobile (2) avec l'unité stationnaire (3) et l'unité périphérique de caisse de celle-ci est autorisée, si une première liaison logique (X) de l'unité mobile (2) à l'unité stationnaire (3) et une deuxième liaison logique (Y) de l'unité mobile (2) à ladite au moins une unité périphérique de caisse sont à établir, dans lequel on considère comme une liaison logique une liaison qui peut avoir lieu physiquement par l'intermédiaire de plusieurs protocoles et technologies de réseau différents mais paraît pour l'unité mobile comme une liaison par une interface locale avec un protocole d'interface local, et si le contrôle est réussi, alors un accès par la liaison logique (X) de l'unité mobile (2) à l'unité stationnaire (3) et un accès par la liaison logique (Y) de l'unité mobile (2) à l'unité périphérique de caisse (5.1, 5.2, 5.3) sont autorisés, et l'unité de gestion (6) détecte une liaison logique (X) (Y) autorisée correspondante, et dans lequel l'unité mobile et l'unité stationnaire sont réalisées pour envoyer pour l'établissement de la liaison logique une demande à l'unité de gestion (6) pour que l'unité de gestion (6) vérifie à l'aide de l'ensemble de règles si une liaison logique (X) (Y) de l'unité mobile (2) avec l'unité stationnaire (3) et les unités périphériques de caisse (5.1, 5.2, 5.3) de celle-ci est autorisée, et si elle est autorisée, alors l'unité de gestion (6) envoie un message correspondant à l'unité mobile (2) et à l'unité stationnaire (3) pour autoriser l'accès par la liaison logique (X) (Y), et sinon aucune liaison logique n'est établie.

2. Système de caisse selon la revendication précédente, dans lequel l'unité de gestion (6) doit à la fois recevoir une demande par la liaison physique (11) en provenance de l'unité mobile (2) et en parallèle une demande par la liaison physique (12) en provenance de l'unité stationnaire (3) afin d'autoriser un accès par la liaison logique (X) (Y) .

3. Système de caisse selon une ou plusieurs des deux revendications précédentes, dans lequel une ID de l'unité mobile (2) et/ou une ID de l'unité stationnaire (3) peuvent être détectées, et elles sont transmises à l'unité de gestion (6) pour identification,
et/ou dans lequel l'unité stationnaire (3) et l'unité mobile (2) doivent communiquer avec l'unité de gestion (6) dans une période de temps définie.

4. Système de caisse selon une ou plusieurs des trois revendications précédentes, dans lequel l'unité mobile (2) et/ou l'unité stationnaire (3) sont réalisées pour échanger une ID par une liaison de contact et/ou une liaison en champ proche sans fil, de préférence par NFC, RFID, ZigBee, Bluetooth et/ou Bluetooth LE afin de transmettre l'ID ensuite au serveur de gestion (6) par un réseau, de préférence WLAN, Ethernet et/ou Bluetooth.

5. Système de caisse selon les revendications précédentes, dans lequel la liaison physique (10) et/ou la liaison physique (10.1) entre les unités mobiles (2), l'unité stationnaire (3), l'unité de gestion (6) et/ou l'unité périphérique de caisse (5.1, 5.2, 5.3) sont des liaisons physiques cryptées,
et de préférence dans lequel l'unité de gestion (6) est conçue pour transmettre des clés d'une paire de clés de cryptage à l'unité mobile et/ou à l'unité stationnaire et de préférence aussi pour les générer.

6. Système de caisse selon une ou plusieurs des revendications précédentes, dans lequel sur l'unité mobile (2) est fournie l'interface virtuelle, de préférence RS232, USB, de l'application de caisse qui est acheminée sous forme de liaison logique (X) (Y) jusqu'à l'unité stationnaire (3) et/ou jusqu'à l'unité périphérique de caisse (5.1, 5.2, 5.3), et l'authentification est effectuée par l'unité de gestion (6) .

7. Système de caisse selon une ou plusieurs des revendications précédentes, dans lequel l'ensemble de règles vérifie si l'attribution, l'ID, la synchronisation, la distance spatiale, l'identifiant de connexion de l'utilisateur et/ou la catégorie de l'unité périphérique de caisse sont admissibles afin d'autoriser une liaison logique.

8. Système de caisse selon une ou plusieurs des revendications précédentes, dans lequel l'unité mobile (2) est réalisée pour autoriser une sélection interactive d'unités stationnaires (3) et/ou d'unités périphériques de caisse (5.1, 5.2, 5.3),
et/ou dans lequel il existe un verrouillage physique pour un verrouillage physique après une liaison physique de l'unité stationnaire (3) avec l'unité mobile (2), le verrouillage étant commandé par l'unité de gestion (6) selon un ensemble de règles.

9. Système de caisse selon une ou plusieurs des revendications précédentes, dans lequel l'unité périphérique de caisse (5.1, 5.2, 5.3) correspond à un ou plusieurs des composants suivants :
une caisse sécurisée automatique, un tiroir de caisse, une imprimante, un clavier, un scanner, un scanner 3D, un PINPAD, un lecteur de carte, un moniteur, un affichage par ligne, une balance, un lecteur NFC, un dispositif de dépôt de billets, un dispositif de retrait de billets, un dispositif de dépôt de pièces et/ou un dispositif de retrait de pièces.

10. Procédé permettant de commander un système de caisse (1), le système de caisse comprenant :
- une pluralité d'unités stationnaires (3) qui sont reliées par au moins une liaison physique (4.1, 4.2, 4.3) à au moins une unité périphérique de caisse (5.1, 5.2, 5.3),
- une unité mobile (2) comprenant un dispositif d'affichage ainsi qu'un dispositif d'entrée, dans lequel l'unité mobile est conçue pour exécuter un logiciel de caisse au cours du déroulement duquel un accès à l'unité périphérique de caisse (5.1, 5.2, 5.3) a lieu par l'intermédiaire d'un pilote sur l'unité mobile pour une interface virtuelle,
- une unité de gestion (6) qui est différente de la pluralité d'unités stationnaires (3) et qui gère la pluralité d'unités stationnaires (3) et leurs unités périphériques de caisse, et l'unité de gestion gère un ensemble de règles, l'ensemble de règles déterminant si une liaison de l'unité mobile (2) avec l'une des unités stationnaires (3) et l'unité de périphérique de caisse de celle-ci est autorisée ;
dans lequel
- l'unité mobile peut être reliée à l'une des unités stationnaires (3) par une première liaison physique (10),
- l'unité mobile peut être reliée à l'unité de gestion (6) par une deuxième liaison physique (11) qui est réalisée sous forme de liaison de réseau,
- l'unité stationnaire (3) peut être reliée à l'unité de gestion (6) par une troisième liaison physique (12) qui est réalisée sous forme de liaison de réseau, et
comprenant les étapes consistant à :
- établir une liaison entre l'unité mobile (2) et l'une des unités stationnaires pour indiquer qu'il faut accéder à l'unité périphérique de caisse ;
- demander par l'unité mobile (2) et l'unité stationnaire (3) à l'unité de gestion (6) si une liaison logique (X) (Y) entre l'unité mobile (2) et l'unité stationnaire et l'unité périphérique de caisse de celle-ci est possible,
dans lequel on considère comme une liaison logique une liaison qui peut avoir lieu physiquement par l'intermédiaire de plusieurs protocoles et technologies de réseau différents mais paraît pour l'unité mobile comme une liaison par une interface locale avec un protocole d'interface local ;
- vérifier par l'unité de gestion (6) avec l'ensemble de règles si la liaison logique (X) (Y) est possible,
- si une liaison logique est possible, informer l'unité mobile et l'unité stationnaire qu'une liaison logique est possible,
- établir la liaison logique (X) par l'unité mobile avec l'unité stationnaire et la liaison logique (Y) avec l'unité périphérique de caisse, et
dans lequel l'unité de gestion (6) doit à la fois recevoir une demande par la liaison (11) en provenance de l'unité mobile (2) et en parallèle une demande par la liaison (12) en provenance de l'unité stationnaire (3) afin d'autoriser un accès par la liaison logique (X)(Y), et dans lequel de préférence les demandes doivent arriver dans une fenêtre de temps définie.

11. Système de caisse selon la revendication précédente, dans lequel une ID de l'unité mobile (2) et/ou une ID de l'unité stationnaire (3) sont détectées, et elles sont transmises à l'unité de gestion (6) pour l'identification.

12. Procédé selon la revendication précédente, dans lequel les liaisons physiques entre l'unité mobile (2), l'unité stationnaire (3), l'unité de gestion (6) et/ou l'unité périphérique de caisse (5.1, 5.2, 5.3) sont cryptées.

13. Procédé selon une ou plusieurs des revendications de procédé précédentes, dans lequel sur l'unité mobile (2) est fournie l'interface virtuelle, de préférence RS232, USB, de l'application de caisse qui est acheminée en tant que liaison logique (X) (Y) jusqu'à l'unité stationnaire (3) et/ou jusqu'à l'unité périphérique de caisse (5.1, 5.2, 5.3).

14. Procédé selon une ou plusieurs des revendications de procédé précédentes, dans lequel on vérifie à l'aide de l'ensemble de règles si l'attribution, l'ID, la synchronisation, la distance spatiale, l'identifiant de connexion de l'utilisateur et/ou la catégorie de l'unité périphérique de caisse sont respectés.

15. Procédé selon une ou plusieurs des revendications de procédé précédentes, dans lequel il existe un verrouillage physique, et après une liaison physique de l'unité stationnaire (3) avec l'unité mobile (2), un verrouillage est effectué, le verrouillage étant commandé par l'unité de gestion (6) selon un ensemble de règles.
